# EUROPÄISCHE PATENTSCHRIFT

(11) **EP 2 915 154 B1**
(45) Veröffentlichungstag und Bekanntmachung des Hinweises auf die Patenterteilung: **28.03.2018**
(21) Anmeldenummer: 13785449.3
(22) Anmeldetag: 30.10.2013
(51) Int. Cl.: G08G 3/02, H04B 7/185

(54) **AIS-ÜBERWACHUNGSSYSTEM**
AIS MONITORING SYSTEM
SYSTÈME DE SURVEILLANCE AIS

(30) Priorität: 30.10.2012 DE 102012110384
(43) Veröffentlichungstag der Anmeldung: 09.09.2015
(73) Patentinhaber: Deutsches Zentrum für Luft- und Raumfahrt e.V., 51147 Köln (DE)
(72) Erfinder: PLASS, Simon, 82229 Seefeld (DE)
(74) Vertreter: Aisch, Sebastian
(86) Internationale Anmeldenummer: PCT/EP2013/072712
(87) Internationale Veröffentlichungsnummer: WO 2014/067996

(56) Entgegenhaltungen:
- EP-A1- 2 395 680
- WO-A1-2008/148188
- US-A1- 2008 086 267
- US-A1- 2009 161 797
- US-A1- 2011 207 398
- US-A1- 2012 239 285
- ERIKSEN T ET AL: "Maritime traffic monitoring using a space-based AIS receiver", ACTA ASTRONAUTICA, PERGAMON PRESS, ELMSFORD, GB, Bd. 58, Nr. 10, 1. Mai 2006 (2006-05-01), Seiten 537-549, XP027930605, ISSN: 0094-5765 [gefunden am 2006-05-01]

## Beschreibung

Die Erfindung betrifft ein Überwachungssystem zur Überwachung von Schiffen, die jeweils AIS-Schiffssendeeinheiten zum Aussenden von AIS-Funksignalen, die Schiffsverkehrsdaten des jeweiligen sendenden Schiffes enthalten, haben, mit einer Mehrzahl von AIS-Empfangseinheiten zum Empfangen der von den Schiffen ausgesendeten AIS-Funksignale innerhalb eines jeweiligen Empfangsbereiches der AIS-Empfangseinheiten, wobei zumindest ein Teil der AIS-Empfangseinheiten an einer Mehrzahl von Flugobjekten zur Luftüberwachung angeordnet sind.

Die Überwachung des weltweit zunehmenden Schiffsverkehrs basiert heute überwiegend auf Radarüberwachung, Sprechfunk sowie die Nutzung von AIS (Automatic Identification System). Seit dem Jahr 2000 ist das AIS von der internationalen Seeschifffahrtsorganisation (IMO) als verbindlicher Standard festgelegt worden, um die Sicherheit des internationalen Schiffsverkehrs zu erhöhen. Dieses lokal begrenzte Funksystem dient dabei zum Austausch von Navigations- und anderen Schiffsdaten, die es den Schiffen ermöglichen sollen, einen umfassenden Überblick über den benachbarten Schiffsverkehr zu erhalten. Primäres Ziel ist es dabei, Kollisionen zwischen Schiffen zu vermeiden.

Das AIS sendet abwechselnd auf zwei Kanälen im UKW-Seefunkbereich, nämlich zum Einen auf 168,975 MHz und zum Anderen auf 162,025 MHz. Die Aussendung der einzelnen AIS-Schiffsdaten erfolgt dabei in festen Zeitrahmen, deren Belegung selbstständig durch die betreffenden Teilnehmer abgestimmt wird (sogenannte SOTDMA: self-organizing time-division multiple access). Somit stehen pro Minute lediglich 2250 Zeitschlitze zur Übertragung von Daten den einzelnen Teilnehmern zur Verfügung.

Auf Grund des verwendeten UKW-Frequenzbandes entspricht die Funkreichweite von AIS von Schiff zu Schiff ca. 40 bis 60 km, was ein wenig mehr als die normale Sichtweite auf hoher See entspricht. Küstenstationen können durch ihre höhere Position einen Umkreis von bis zu 100 km abdecken. Auf Grund der beschränkten Reichweite sowie des verwendeten Übertragungsprotokolls bilden Schiffe, die sich gegenseitig sehen und empfangen können, eine AIS-Funkzelle, innerhalb derer die Teilnehmer ihre Daten kollisionsfrei senden und empfangen können.

Damit stellt das AIS lediglich ein lokales Funksystem dar, das zwar für ein auf hoher See befindliches Schiff ausreichend Daten zur Verfügung stellt, jedoch für die weltweite Erhebung des zunehmenden Schiffsverkehrs nicht geeignet ist. Für Reedereien, Schifffahrtsorganisationen oder Umweltministerien wäre jedoch eine zeitnahe Erhebung der weltweit anfallenden AIS-Schiffsverkehrsdaten von großem Interesse, um insbesondere auch illegalen Machenschaften auf hoher See entgegenzuwirken.

In jüngster Vergangenheit wurden Versuche unternommen AIS-Empfangsantennen auf Satelliten anzuordnen, um so die weltweit ausgesendeten AIS-Funksignale, die von den Schiffen regelmäßig ausgesendet werden, global empfangen zu können. Dies würde zwar eine weltweite Erhebung der mit Hilfe von AIS ausgesendeten Schiffsverkehrsdaten ermöglichen, hat jedoch in der Praxis erhebliche Schwierigkeiten und Nachteile, da das AIS nicht für einen Satellitenempfang entwickelt worden ist.

Denn auf Grund der extrem hohen Flughöhe eines Satelliten wird ein Empfangsbereich, der auch als Ausleuchtungszone oder Footprint bezeichnet wird, mit einem Durchmesser von etwa 5000 km erzeugt. Da sich das AIS als lokales Funksystem selbstständig in einzelne Funkzellen organisiert, die alle auf den gleichen Frequenzbändern senden, kommt es bei einem derart großen Empfangsdurchmesser zum Empfang einer Vielzahl von Funkzellen mit identischen Sendefrequenzen, so dass sich die AIS-Funksignale der verschiedenen AIS-Funkzellen im Empfangsbereich des Satelliten überlagern und ohne eine aufwendige Signalverarbeitung nicht mehr auswertbar sind.

Hierfür schlägt beispielsweise die DE 10 2011 113 152.7 vor, AIS-Empfangseinheiten an Verkehrsflugzeugen anzuordnen, um so die von den Schiffen ausgesendeten AIS-Funksignale während des Fluges aufzuzeichnen. Auf Grund der geringeren Flughöhe von Flugzeugen (ca. 10 km) gegenüber Satelliten ist der aufgespannte Empfangsbereich mit einem Durchmesser von ca. 400 bis 600 km deutlich geringer, so dass das Risiko von Signalkollisionen auf Grund des Empfangens verschiedener, unterschiedlicher AIS-Funkzellen geringer ist. Allerdings hat sich gezeigt, dass auch hier eine aufwendige Signalprozessierung notwendig ist, da Verkehrsflugzeuge meist die stark frequentierten Schifffahrtsrouten abdecken und es somit trotz des geringeren Empfangsdurchmessers gegenüber Satelliten zum Empfangen einer Vielzahl von AIS-Funkzellen kommt, so dass auch hier überlagerte AIS-Funksignale empfangen werden.

Aus der US 2011/0207398 A1 ist ein Verfahren zum Wiederherstellen überlagerter AIS-Funksignale bekannt, die mit Hilfe von Satelliten empfangen wurden. Dabei werden die überlagerten AIS-Funksignale an eine Kontrollstation übertragen, die mittels empfangener AIS-Funksignale, die von terrestrischen Empfangseinheiten empfangen wurden, die in den überlagerten AIS-Funksignalen enthaltenen AIS-Funksignale extrahiert.

Aus der WO 2008/148188 A1 ist ein System zum Dekodieren von AIS-Funksignalen bekannt, die mit Hilfe von einer an einem Satelliten angeordneten AIS-Empfangseinheit empfangen werden. Dabei werden ebenfalls einzelne AIS-Funksignale zur Analyse der überlagerten AIS-Funksignale herangezogen. Aus der US 2012/0239285 A1 ist ein System zum Empfangen von AIS-Funksignalen, die von Schiffen ausgesendet wurden, an Satelliten bekannt, wobei die von den Satelliten empfangenen AIS-Funksignale dann an eine Bodenstation oder andere mobile Endgeräte übertragen werden können.

Es ist daher Aufgabe der vorliegenden Erfindung ein Überwachungssystem zur Überwachung von Schiffen mittels AIS-Funksignalen anzugeben, mit dem die AIS-Funksignale trotz des großen Empfangsdurchmessers von Flugobjekten aufgenommen werden können und die Schiffsverkehrsdaten dennoch sicher und zuverlässig aus den AIS-Funksignalen extrahiert werden können.

Die Aufgabe wird mit dem Überwachungssystem gemäß Anspruch 1 erfindungsgemäß gelöst.

Demnach wird erfindungsgemäß vorgeschlagen, dass die Signalverarbeitung der überlagerten AIS-Funksignale, die von einem Flugobjekt durch seine AIS-Empfangseinheit empfangen wurden, mit Hilfe von AIS-Funksignalen unterstützt werden, die Teil der empfangenen überlagerten AIS-Funksignale sind und von anderen AIS-Empfangseinheiten empfangen wurden. So überlagern sich die Empfangsbereiche der verschiedenen AIS-Empfangseinheiten, insbesondere die der Flugobjekte, recht häufig, so dass zumindest ein Teil der AIS-Funksignale eines Empfangsbereiches auch von benachbarten AIS-Empfangseinheiten zumindest teilweise (im Überlappungsbereich) empfangen werden können. Diese von den anderen AIS-Empfangseinheiten im Überlappungsbereich des Empfangsbereiches des Flugobjektes aufgezeichneten AIS-Funksignale können dann zur Signalprozessierung und Signalaufbereitung der überlagerten AIS-Funksignale des Empfangsbereiches verwendet werden, so dass die Signalaufbereitung qualitativ wesentlich verbessert werden kann. Erfindungsgemäß ist das Flugobjekt ein Verkehrsflugzeug.

Hierdurch wird eine kooperative Signalverarbeitung erreicht, bei der dieselben AIS-Funksignale, die jedoch von anderen AIS-Empfangseinheiten empfangen wurden, zur Ermittlung der AIS-Funksignale aus den überlagerten AIS-Funksignalen herangezogen werden. Unter Kenntnis eines AIS-Funksignals, das in überlagerten AIS-Funksignalen enthalten sein soll, kann die Signalprozessierung wesentlich vereinfacht werden, da diese Funksignale beispielsweise von dem Gesamtsignal (überlagertes Funksignal) abgezogen werden und so dieser Prozess iterativ fortgesetzt werden kann, bis alle Signale detektiert sind.

Unter dem Begriff der Luftüberwachung wird im Übrigen die Überwachung der Schiffe durch Empfangen von AIS-Funksignalen mit Hilfe von Flugobjekten verstanden. Überlagerte AIS-Funksignale sind dabei ein AIS-Gesamtsignal, welches durch eine AIS-Empfangseinheit eines Flugobjektes empfangen werden kann, wenn sich in dem Empfangsbereich mehrere verschiedene AIS-Funkzellen befinden, so dass es zu Signalkollisionen und Störungen durch Überlappen der AIS-Funksignale der verschiedenen AIS-Funkzellen kommt. Mit Hilfe der vorliegenden Erfindung kann dabei die Detektionswahrscheinlichkeit von AIS-Funksignalen innerhalb eines solchen überlappenden und sich störenden AIS-Funksignals erhöht werden.

Erfindungsgemäß weist jedes Flugobjekt, das eine AIS-Empfangseinheit aufweist, mindestens eine Signalverarbeitungseinrichtung auf, so dass die Signalprozessierung der überlagerten AIS-Funksignale dezentral durch jedes Flugobjekt erfolgen kann. Um nun Informationen bezüglich AIS-Funksignalen anderer AIS-Empfangseinheiten erhalten zu können, sind die AIS-Empfangseinheiten mit mindestens einer Kommunikationseinrichtung signaltechnisch verbunden, so dass mit Hilfe der Kommunikationseinrichtung die durch eine AIS-Empfangseinheit empfangenen AIS-Funksignale mit anderen Signalverarbeitungseinrichtungen über einen Kommunikationslink ausgetauscht werden können. Die über die Kommunikationseinrichtungen ausgetauschten AIS-Funksignale werden dann der jeweiligen Signalverarbeitungseinrichtung zur Signalverarbeitung bereitgestellt.

So ist es beispielsweise denkbar, dass an einem Flugobjekt eine AIS-Empfangseinheit, eine Signalverarbeitungseinrichtung und eine Kommunikationseinrichtung angeordnet sind. An einem weiteren Flugobjekt ist dieselbe Anordnung vorgesehen. Werden nun AIS-Funksignale von dem ersten Flugobjekt empfangen, so werden diese durch das erste Flugobjekt empfangenen AIS-Funksignale an das zweite Flugobjekt über einen Kommunikationslink zwischen den Kommunikationseinrichtungen übertragen, so dass die von dem ersten Flugobjekt empfangenen AIS-Funksignale der Signalverarbeitungseinrichtung des zweiten Flugobjektes zur Verfügung gestellt werden können. Überlappen sich nun die Empfangsbereiche des ersten Flugobjektes mit dem des zweiten Flugobjektes in einem bestimmten Bereich, so empfangen beide Flugobjekte über ihre AIS-Empfangseinheiten im gemeinsamen Empfangsbereich dieselben Funksignale. Diese im gemeinsamen Empfangsbereich empfangenen Funksignale können dann dem jeweils anderen Flugobjekt und seiner jeweiligen Signalverarbeitungseinrichtung zur Signalprozessierung zur Verfügung gestellt werden.

Dabei können die AIS-Funksignale, die in dem gemeinsamen Empfangsbereich eines Flugobjektes und seiner AIS-Empfangseinheit empfangen werden, auch von AIS-Empfangseinheiten empfangen werden, die beispielsweise auf Schiffen, Küstenstationen oder Ähnlichem angeordnet sind. Die Erfindung ist dabei nicht auf den Austausch von AIS-Funksignalen über ihre Kommunikationseinrichtungen zwischen Flugobjekten beschränkt.

Alternativ oder zusätzlich ist die Signalverarbeitungseinrichtung Teil einer Bodenstation, wobei die AIS-Empfangseinheiten jeweils mit mindestens einer Kommunikationseinrichtung signaltechnisch verbunden sind, so dass die von den AIS-Empfangseinheiten empfangenen AIS-Funksignale über einen Kommunikationslink an die Bodenstation übertragen und dann der Signalverarbeitungseinrichtung der Bodenstation bereitgestellt werden können. Bei der zentralen Lösung der Signalverarbeitung werden somit sämtliche empfangenen AIS-Funksignale einschließlich der überlagerten AIS-Funksignale an eine zentrale Signalverarbeitungseinrichtung einer Bodenstation gesendet, die dann sämtliche Daten zur Verfügung gestellt bekommt und so entscheiden kann, welche Funksignale parallel von verschiedenen AIS-Empfangseinheiten empfangen wurden, um so die Signalprozessierung wesentlich zu verbessern und die Detektionswahrscheinlichkeit beim Ermitteln der AIS-Funksignale aus überlagerten AIS-Funksignalen zu erhöhen.

Dabei können die verschiedenen AIS-Empfangseinheiten über ihre Kommunikationseinrichtung mit einem direkten Kommunikationslink mit der Bodenstation verbunden sein, beispielsweise über einen Satelliten-Kommunikationslink oder Ähnlichen.

Vorteilhafterweise werden die empfangenen AIS-Funksignale einschließlich der überlagerten AIS-Funksignale um eine Zeit- und/oder Ortsinformation ergänzt, beispielsweise mit Hilfe einer GNSS-Einrichtung, die mit der jeweiligen AIS-Empfangseinheit verbunden ist. Hierdurch kann beim Empfangen der Signale eine Zeit- und/oder Ortinformation der AIS-Empfangseinheit erzeugt werden, die dann dem Signal hinzugefügt wird. Die Signalverarbeitungseinrichtung bzw. Einrichtungen sind dann so eingerichtet, dass sie die AIS-Funksignale aus den empfangenen überlagerten AIS-Funksignalen weiterhin in Abhängigkeit von den ergänzten Zeit- und/oder Ortsinformationen der AIS-Funksignale ermitteln. So kann beispielsweise mit Hilfe der Zeit- und/oder Ortsinformation eines Signals festgestellt werden, ob dieses AIS-Funksignal zur selben Zeit in einem überlappenden Empfangsbereich empfangen wurde, so dass hieraus abgeleitet werden kann, ob sich dieses AIS-Funksignal in einem überlagerten AIS-Funksignal, empfangen durch eine andere AIS-Empfangseinheit, enthalten ist oder nicht. Mit anderen Worten, mit Hilfe einer solchen Zeit- und/oder Ortsinformation kann der parallele Empfang eines AIS-Funksignals innerhalb eines gemeinsamen Empfangsbereiches festgestellt werden und so das AIS-Funksignal zur Signalprozessierung von überlagerten AIS-Funksignalen herangezogen werden.

Erfindungsgemäß ist weiterhin vorgesehen, dass mindestens eine der Signalverarbeitungseinrichtungen eingerichtet ist, in Abhängigkeit von Signallaufzeiten desselben AIS-Funksignals, das von unterschiedlichen AIS-Empfangseinheiten empfangen wurde, eine Ortsinformation der AIS-Schiffssendeeinheit, die das AIS-Funkssignal (einfaches oder überlagertes Funksignal) ausgesendet hat, zu bestimmen So kann durch eine Hyperbelnavigation oder sogar eine Trilateration oder auch Multilateration der empfangenen AIS-Funksignale der Ort bzw. die Position der AIS-Schiffssendeeinheit festgestellt werden, die in der Regel mit der Schiffsposition im Wesentlichen übereinstimmt. In Abhängigkeit dieser Orts- bzw. Positionsinformation werden nun die AIS-Funksignale aus den empfangenen überlagerten AIS-Funksignalen ermittelt, wobei hier die Ortsinformation unterstützend wirkt. Denn unter der Kenntnis der Ortsinformation des Senders und dem Rückschluss auf die Schiffsposition ist somit eine Information bekannt, die sich innerhalb der empfangenen Funksignale befinden muss, da die Schiffsposition Bestandteil der Schiffsverkehrsdaten, die in den AIS-Funksignalen enthalten sind, sind.

So ist es denkbar, dass jede Signalverarbeitungseinrichtung nach Empfang eines AIS-Funksignals eine Laufzeitbestimmung des Funksignals durchführt. Bei überlagerten AIS-Funksignalen kann dies bspw. anhand eines Signalpeaks erfolgen, das aus den überlagerten AIS-Funksignalen klar hervorsticht.

Durch eine bekannte Information, die Bestandteil der empfangenen Signale sein muss, lässt sich somit die Signalprozessierung wesentlich vereinfachen. So ist es beispielsweise besonders vorteilhaft, wenn die Signalverarbeitungseinrichtung zum Abrufen und/oder Empfangen von bereits aus AIS-Funksignalen extrahierten Schiffsverkehrsdaten eingerichtet ist, um so unter Kenntnis von den Schiffsverkehrsdaten eines Empfangsbereiches die Signalprozessierung der überlagerten AIS-Funksignale durchzuführen. Die Schiffsverkehrsdaten können dabei beispielsweise aus einer Datenbank abgerufen werden, in der sie nach der Extraktion aus den AIS-Funksignalen reingeschrieben werden. Denkbar ist aber auch, dass die Schiffsverkehrsdaten bei der dezentralen Lösung zwischen den Signalverarbeitungseinrichtungen bzw. einer speziellen Extraktionseinheit untereinander ausgetauscht werden, so dass die AIS-Funksignale aus den überlagerten AIS-Funksignalen anhand von Zusatzinformationen beispielsweise eines vorherigen groben Lagebildes innerhalb des Empfangsbereiches ermittelt werden. Dies kann beispielsweise anhand der statistischen Schiffsdaten wie IMO-Nummer, Schiffsname, Rufzeichen, etc. schneller und sicherer detektiert werden, da diese Daten nunmehr exakt bestimmten Signalen zugeordnet werden können.

Vorteilhafterweise ist daher bei der Signalverarbeitungseinrichtung eine Extraktionseinheit vorgesehen, die zum Extrahieren der in den AIS-Funksignalen enthaltenen Schiffsverkehrsdaten eingerichtet ist.

Die Signalverarbeitung kann beispielsweise derart erfolgen, dass AIS-Funksignale, die von anderen AIS-Empfangseinheiten empfangen wurden, mit den überlagerten AIS-Funksignalen korreliert werden, wobei in Abhängigkeit der Korrelation die AIS-Funksignale aus den überlagerten AIS-Funksignalen ermittelt werden. Dabei werden die Signale miteinander so korreliert, dass Muster an Korrelationspeaks, welche die Laufzeitunterschiede aufzeichnen, entstehen, so dass anhand dieser Korrelationspeaks die Signalverarbeitung und Ermittlung der AIS-Funksignale durchgeführt wird. Bei der Detektion eines Signals kann dieses dann von dem Gesamtsignal (überlagertes AIS-Funksignal) abgezogen werden, wobei durch Iteration dieses Prozesses dann sämtliche AIS-Funksignale ermittelbar werden.

Im Sinne der vorliegenden Erfindung handelt es sich bei dem Flugobjekt um ein Verkehrsflugzeug Die AIS-Empfangseinheiten können beispielsweise an Schiffen, Küstenempfangsstationen sowie geostationären Flugplattformen angeordnet werden.

Die Erfindung wird anhand der beigefügten Figuren beispielhaft näher erläutert. Es zeigen:
- Figur 1: - schematische Darstellung eines Überwachungssystems mit dezentraler Signalverarbeitung;
- Figur 2: - schematische Darstellung eines Überwachungssystems mit zentraler Signalverarbeitung.

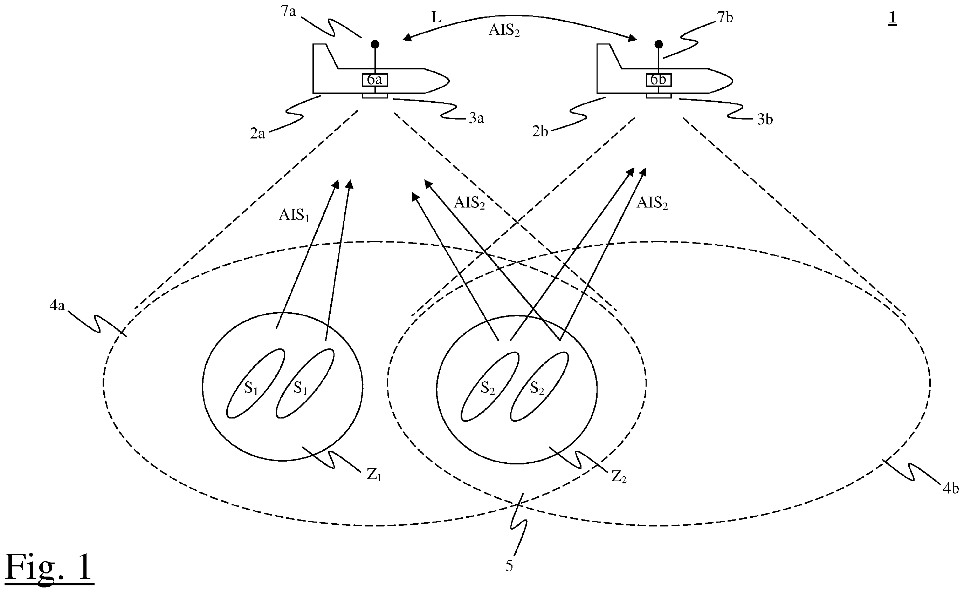

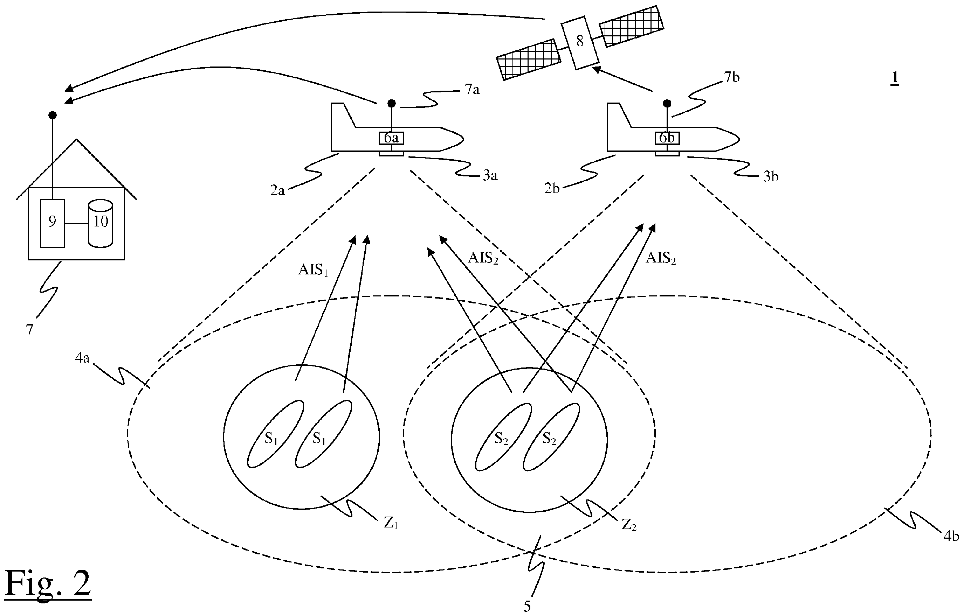

Figur 1 und 2 zeigen das erfindungsgemäße Überwachungssystem in zwei Ausführungsformen, nämlich einer dezentralen Signalverarbeitung und einer zentralen Signalverarbeitung. Die beiden Ausführungsbeispiele stellen dabei eine Alternative zu dem jeweils anderen Ausführungsbeispiel dar. Die beiden Ausführungsbeispiele in Figur 1 und Figur 2 können allerdings auch gemeinsam in einem Überwachungssystem betrieben werden, d.h. mit sowohl einer zentralen als auch dezentralen Signalverarbeitung.

Figur 1 zeigt das Überwachungssystem 1 mit einer dezentralen Signalverarbeitung. Zwei Flugobjekte 2a und 2b haben jeweils eine AIS-Empfangseinheit 3a und 3b an Bord, mit denen die Flugobjekte 2a, 2b AIS-Funksignale AIS₁ und AIS₂ empfangen können.

So kann das Flugobjekt 2a mittels seiner AIS-Empfangseinheit 3a innerhalb seines Empfangsbereiches 4a die AIS-Funksignale AIS₁ und AIS₂ empfangen. Das Flugobjekt 2b befindet sich in einem gewissen Abstand zu dem Flugobjekt 2a, wobei der Empfangsbereich 4b des Flugobjektes 2b sich in einem Teilbereich 5 mit dem Empfangsbereich 4a des Flugobjektes 2a überschneidet bzw. überlappt. Die in dem Überlappungsbereich 5 ausgesendeten AIS-Funksignale AIS₂ werden dann auch von der AIS-Empfangseinheit 3b des Flugobjektes 2b empfangen.

Die AIS-Funksignale AIS₁ sind dabei AIS-Funksignale einer ersten AIS-Funkzelle Z₁, während die AIS-Funksignale AIS₂ von Schiffen ausgesendet werden, die sich in einer zweiten Zelle Z₂ befinden. Die Schiffe S₁ der ersten Zelle Z₁ können dabei die Schiffe S₂ der zweiten Zelle Z₂ nicht sehen und ihre entsprechenden ausgesendeten AIS-Funksignale ebenfalls nicht empfangen.

Aufgrund der Überlappung der beiden Empfangsbereiche 4a, 4b im gemeinsamen Empfangsbereich 5 kann das Flugobjekt 2a die AIS-Funksignale AIS₁ und AIS₂ der ersten Zelle Z₁ und der zweiten Zelle Z₂ empfangen, während das Flugobjekt 2b lediglich die AIS-Funksignale AIS₂ der zweiten Zelle Z₂ empfangen kann. Die AIS-Funksignale AIS₁ der ersten Zelle Z₁ liegen dabei nicht innerhalb des Empfangsbereiches 4b des zweiten Flugobjektes 2b. Lediglich die AIS-Funksignale AIS₂ der zweiten Zelle Z₂, die innerhalb des gemeinsamen Empfangsbereiches 5 (Überlappungsbereich) liegen, kann von beiden Flugobjekten 2a, 2b gemeinsam empfangen werden. Nach dem Empfangen der AIS-Funksignale durch die jeweiligen AIS-Empfangseinheiten 3a, 3b werden dann die empfangenen Signale an eine jeweils mit der jeweiligen Empfangseinheit verbundene Signalverarbeitungseinrichtung 6a, 6b weitergeleitet. Die Signalverarbeitungseinrichtung 6a ist dabei auf dem ersten Flugobjekt 2a angeordnet, während die Signalverarbeitungseinrichtung 6b auf dem zweiten Flugobjekt 2b angeordnet ist.

Da das Flugobjekt 2a in seinem Empfangsbereich 4a mindestens zwei Zellen Z₁ und Z₂ empfängt, ist das empfangene Signal ein überlagertes AIS-Funksignal, das signaltechnisch aufbereitet werden muss. Hierzu empfängt das erste Flugobjekt 2a über eine Kommunikationseinrichtung 7a die von dem zweiten Flugobjekt 2b empfangenen AIS-Funksignale AIS₂ über einen Kommunikationslink L. Das zweite Flugobjekt 2b weist dabei ebenfalls eine Kommunikationseinheit 7b auf. Mit Hilfe dieser Kommunikationseinrichtungen 7a, 7b können so die empfangenen AIS-Funksignale untereinander ausgetauscht werden, wobei im Sinne der vorliegenden Erfindung ein Austausch der Funksignale dahingehend zu verstehen ist, dass die Funksignale über einen Kommunikationslink an andere Kommunikationseinheiten ausgesendet und von diesen empfangen werden können.

Nachdem nun das zweite Flugobjekt 2a über den Kommunikationslink L die AIS-Funksignale AIS₂ von dem zweiten Flugobjekt 2b empfangen hat, kann die Signalverarbeitungseinrichtung 6a die AIS-Funksignale aus den empfangenen überlagerten AIS-Funksignalen extrahieren, in dem die Signalverarbeitungseinrichtung 6a beispielsweise von den empfangenen überlagerten AIS-Funksignal das AIS-Funksignal AIS₂, welches von dem zweiten Flugobjekt 2b bereitgestellt wurde, extrahiert. Im Ausführungsbeispiel der Figur 1 verbliebe dann das AIS-Funksignal AIS₁, so dass sämtliche AIS-Funksignale des Empfangsbereiches 4a des zweiten Flugobjektes 2a trotz der Überlagerung und Störung durch das gleichzeitige Senden extrahiert werden konnten.

Im Ausführungsbeispiel der Figur 1 wurde aus Übersichtlichkeitsgründen auf eine Vielzahl von verschiedenen AIS-Funkzellen verzichtet, wobei lediglich zwei Funkzellen dargestellt sind. Hierauf ist die Erfindung jedoch nicht beschränkt. Vielmehr ist vorgesehen, dass die Flugobjekte eine Vielzahl von unterschiedlichsten AIS-Funkzellen empfangen können, wobei mit Hilfe der über den Kommunikationslink übertragenen Funksignale anderer Flugobjekte dann das überlagerte Funksignal signaltechnisch aufbereitet wird.

Dabei kann die Signalverarbeitung durch die Signalverarbeitungseinrichtung 6a, 6b weiter verbessert werden, wenn zusätzliche Informationen zur Verfügung gestellt werden, wie beispielsweise ein aktuelles Lagebild des Empfangsbereiches 4a oder ähnliches. Durch Kenntnis von statischen Schiffsdaten kann die Signalaufbereitung und die Ermittlung der AIS-Funksignale aus den überlagerten AIS-Funksignalen wesentlich verbessert werden.

Figur 2 zeigt im Gegensatz zu Figur 1 eine zentrale Lösung der Signalverarbeitung, wobei die von den Flugobjekten 2a, 2b empfangenen AIS-Funksignale über eine Kommunikationseinrichtung 6a, 6b an eine Bodenstation 7 weitergeleitet werden. Dabei kann die Übertragung direkt erfolgen, wie dies beispielsweise durch das Flugobjekt 2a realisiert wird oder über einen Satellitenkommunikationslink 8, wie dies am Beispiel des zweiten Flugobjektes 2b gezeigt ist. In der Bodenstation 7 befindet sich eine zentrale Signalverarbeitungseinrichtung 9, welche die empfangenen AIS-Funksignale ähnlich zu den Signalverarbeitungseinrichtungen 6a, 6b der Figur 1 aufbereitet. Dabei kann die Signalverarbeitungseinrichtung 9 aus einer Datenbank 10 entsprechende Zusatzinformationen bezüglich von Schiffsdaten innerhalb der Empfangsbereiche 4a, 4b abrufen, um so die Signalverarbeitung und die Detektion der AIS-Funksignale aus den überlagerten AIS-Funksignalen zu verbessern.

Die Flugobjekte 2a, 2b in den Figuren 1 und 2 sind Verkehrsflugzeuge. Mit den in der Datenbank 10 abgespeicherten Zusatzinformationen lässt sich das Auffinden der einzelnen AIS-Funksignale innerhalb der überlagerten AIS-Funksignale wesentlich verbessern, da nun zumindest ein Teil des Inhaltes der einzelnen Funksignale bekannt ist. Darüber hinaus ist es denkbar, dass derartige Zusatzinformationen nicht nur durch das Extrahieren der Daten aus den einzelne Funksignalen gewonnen werden, sondern beispielsweise die Position des Senders mit Hilfe von Laufzeitmessungen und Triangulationen erfolgt. Auch hierdurch lässt sich das Auffinden der Funksignale verbessern.

## Patentansprüche

1. Überwachungssystem (1) zur Überwachung von Schiffen (S₁, S₂), die jeweils AIS-Schiffssendeeinheiten zum Aussenden von AIS-Funksignalen (AIS₁, AIS₂), die Schiffsverkehrsdaten des jeweiligen sendenden Schiffes (S₁, S₂) enthalten, haben, mit einer Mehrzahl von AIS-Empfangseinheiten (3a, 3b) zum Empfangen der von den Schiffen (S₁, S₂) ausgesendeten AIS-Funksignale (AIS₁, AIS₂) innerhalb eines jeweiligen Empfangsbereiches (4a, 4b) der AIS-Empfangseinheiten (3a, 3b), wobei zumindest ein Teil der AIS-Empfangseinheiten (3a, 3b) an einer Mehrzahl von Verkehrsflugzeugen (2a, 2b) zur Luftüberwachung angeordnet sind, wobei mindestens eine Signalverarbeitungseinrichtung (6a, 6b, 9) vorgesehen ist, die eingerichtet ist, AIS-Funksignale (AIS₁, AIS₂) aus empfangenen überlagerten AIS-Funksignalen (AIS₁₊₂) verschiedener AIS-Funkzellen (Z₁, Z₂) eines Empfangsbereiches (4a) einer an einem Verkehrsflugzeug (2a) angeordneten AIS-Empfangseinheit (3a) in Abhängigkeit von einem oder mehreren AIS-Funksignalen (AIS₂) der überlagerten AIS-Funksignale (AIS₁₊₂) des Empfangsbereiches (4a), die von einer oder mehreren von der AIS-Empfangseinheit (3a) des Verkehrsflugzeuges (2a) verschiedenen AIS-Empfangseinheiten (3b) innerhalb des Empfangsbereiches (4a) empfangen wurden, zu ermitteln, **dadurch gekennzeichnet, dass** an jedem Verkehrsflugzeug (2a, 2b) mindestens eine Signalverarbeitungseinrichtung (6a, 6b) angeordnet ist, die mit der AIS-Empfangseinheit (3a, 3b) des jeweiligen Verkehrsflugzeuges (2a, 2b) signaltechnisch verbunden ist, und dass die AIS-Empfangseinheiten (3a, 3b) mit mindestens einer Kommunikationseinrichtung (7a, 7b) signaltechnisch verbunden sind, wobei die Kommunikationseinrichtungen (7a, 7b) jeweils eingerichtet sind, die von den verbundenen AIS-Empfangseinheiten (3a, 3b) in dem jeweiligen Empfangsbereich (4a, 4b) empfangene AIS-Funksignale über einen Kommunikationslink (L) mit anderen Kommunikationseinrichtungen auszutauschen und ausgetauschte AIS-Funksignale einer mit der jeweiligen Kommunikationseinrichtung verbundenen Signalverarbeitungseinrichtung zur Signalverarbeitung bereitzustellen, und/oder dass eine Bodenstation (7) vorgesehen ist, welche eine Signalverarbeitungseinrichtung (9) aufweist, und dass die AIS-Empfangseinheiten (3a, 3b) jeweils mit mindestens einer Kommunikationseinrichtung (7a, 7b) signaltechnisch verbunden sind, wobei die Kommunikationseinrichtungen jeweils eingerichtet sind, die von den verbundenen AIS-Empfangseinheiten in dem jeweiligen Empfangsbereich empfangene AIS-Funksignale über einen Kommunikationslink an die Bodenstation (7) weiterzuleiten, um die AIS-Funksignale der Signalverarbeitungseinrichtung (9) der Bodenstation bereitzustellen, wobei mindestens eine Signalverarbeitungseinrichtung eingerichtet ist, in Abhängigkeit von Signallaufzeiten desselben AIS-Funksignals, das von unterschiedlichen AIS-Empfangseinheiten empfangen wurde, eine Ortsinformation der AIS-Schiffssendeeinheit, die das AIS-Funkssignal ausgesendet hat, zu bestimmen und AIS-Funksignale aus den empfangenen überlagerten AIS-Funksignalen weiterhin in Abhängigkeit von der ermittelten Ortsinformation zu ermitteln.

2. Überwachungssystem (1) nach Anspruch 1, **dadurch gekennzeichnet, dass** die AIS-Empfangseinheiten eingerichtet sind, die empfangenen AIS-Funksignale um eine Zeit- und/oder Ortsinformation zu ergänzen, wobei mindestens ein Signalverarbeitungseinrichtung zum Ermitteln der AIS-Funksignale aus den empfangenen überlagerten AIS-Funksignalen weiterhin in Abhängigkeit von den ergänzten Zeit- und/oder Ortsinformationen der AIS-Funksignale eingerichtet ist.

3. Überwachungssystem (1) nach einem der vorhergehenden Ansprüche, **dadurch gekennzeichnet, dass** mindestens eine Extraktionseinheit vorgesehen ist, die zum Extrahieren der in den AIS-Funksignalen enthaltenen Schiffsverkehrsdaten eingerichtet ist.

4. Überwachungssystem (1) nach einem der vorhergehenden Ansprüche, **dadurch gekennzeichnet, dass** mindestens eine Signalverarbeitungseinrichtung zum Abrufen und/oder Empfangen von bereits aus den AIS-Funksignalen extrahierten Schiffsverkehrsdaten und zum Ermitteln der AIS-Funksignale aus den empfangenen überlagerten AIS-Funksignalen weiterhin in Abhängigkeit von den abgerufenen und/oder empfangenen Schiffsverkehrsdaten des Empfangsbereiches, in dem die überlagerten AIS-Funksignale empfangen wurden, eingerichtet ist.

5. Überwachungssystem (1) nach einem der vorhergehenden Ansprüche, **dadurch gekennzeichnet, dass** mindestens eine Signalverarbeitungseinrichtung eingerichtet ist, die von einer AIS-Empfangseinheit empfangenen überlagerten AIS-Funksignale mit dem oder den AIS-Funksignalen, die von anderen AIS-Empfangseinheiten empfangen wurden, zu korrelieren und in Abhängigkeit der Korrelation die AIS-Funksignale aus den überlagerten AIS-Funksignalen zu ermitteln.

## Claims

1. A monitoring system (1) for monitoring ships (S₁, S₂) that each have AIS ship transmission units for transmitting AIS radio signals (AIS₁, AIS₂) that contain shipping traffic data from the respective sending ship (S₁, S₂), having a plurality of AIS reception units (3a, 3b) for receiving the AIS radio signals (AIS₁, AIS₂) transmitted by the ships (S₁, S₂) within a respective reception range (4a, 4b) of the AIS reception units (3a, 3b), wherein at least some of the AIS reception units (3a, 3b) are arranged on a plurality of commercial aircraft (2a, 2b) for air monitoring purposes, whereby at least one signal processing device (6a, 6b, 9) is provided that is set up to ascertain AIS radio signals (AIS₁, AIS₂) from received superimposed AIS radio signals (AIS₁₊₂) from different AIS radio cells (Z₁, Z₂) in a reception range (4a) of an AIS reception unit (3a) arranged on a commercial aircraft (2a) on the basis of one or more AIS radio signals (AIS₂) from the superimposed AIS radio signals (AIS₁₊₂) from the reception range (4a) that have been received by one or more AIS reception units (3b) within the reception range (4a) that are different than the AIS reception unit (3a) of the commercial aircraft (2a), **characterized in that** each commercial aircraft (2a, 2b) has at least one signal processing device (6a, 6b) arranged on it that is connected to the AIS reception unit (3a, 3b) of the respective flying object (2a, 2b) for signaling purposes, and **in that** the AIS reception units (3a, 3b) are connected to at least one communication device (7a, 7b) for signaling purposes, wherein the communication devices (7a, 7b) are each set up to exchange the AIS radio signals received by the connected AIS reception units (3a, 3b) in the respective reception range (4a, 4b) with other communication devices via a communication link (L) and to provide exchanged AIS radio signals for a signal processing device, connected to the respective communication device, for signal processing purposes, and/or that a ground station (7) is provided that has a signal processing device (9), and **in that** the AIS reception units (3a, 3b) are each connected to at least one communication device (7a, 7b) for signaling purposes, wherein the communication devices are each set up to forward the AIS radio signals received by the connected AIS reception units in the respective reception range to the ground station (7) via a communication link in order to provide the AIS radio signals for the signal processing device (9) of the ground station, whereby at least one signal processing device is set up to take signal propagation times for the same AIS radio signal as has been received by different AIS reception units as a basis for determining a location information item for the AIS ship transmission unit that has transmitted the AIS radio signal and to ascertain AIS radio signals from the received superimposed AIS radio signals additionally on the basis of the ascertained location information item.

2. The monitoring system (1) as claimed in claim 1, **characterized in that** the AIS reception units are set up to add a time and/or location information item to the received AIS radio signals, wherein at least one signal processing device is set up to ascertain the AIS radio signals from the received superimposed AIS radio signals additionally on the basis of the added time and/or location information items of the AIS radio signals.

3. The monitoring system (1) as claimed in one of the preceding claims, **characterized in that** at least one extraction unit is provided that is set up to extract the shipping traffic data contained in the AIS radio signals.

4. The monitoring system (1) as claimed in one of the preceding claims, **characterized in that** at least one signal processing device is set up to retrieve and/or receive shipping traffic data already extracted from the AIS radio signals and to ascertain the AIS radio signals from the received superimposed AIS radio signals additionally on the basis of the retrieved and/or received shipping traffic data from the reception range in which the superimposed AIS radio signals have been received.

5. The monitoring system (1) as claimed in one of the preceding claims, **characterized in that** at least one signal processing device is set up to correlate the superimposed AIS radio signals received by an AIS reception unit to the AIS radio signal(s) that has/have been received by other AIS reception units and to take the correlation as a basis for ascertaining the AIS radio signals from the superimposed AIS radio signals.

## Revendications

1. Système de surveillance (1) destiné à surveiller des navires (S₁, S₂) qui possèdent respectivement des unités d'émission de navire AIS destinées à émettre des signaux radioélectriques AIS (AIS₁, AIS₂), lesquels contiennent des données de trafic de navire du navire (S₁, S₂) émetteur respectif, comprenant une pluralité d'unités de réception AIS (3a, 3b) destinées à recevoir les signaux radioélectriques AIS (AIS₁, AIS₂) émis par les navires (S₁, S₂) à l'intérieur d'une zone de réception (4a, 4b) respective des unités de réception AIS (3a, 3b), au moins une partie des unités de réception AIS (3a, 3b) étant disposées sur une pluralité d'avions de ligne (2a, 2b) servant à la surveillance aérienne, au moins un dispositif de traitement de signaux (6a, 6b, 9) étant présent, lequel est conçu pour déterminer des signaux radioélectriques AIS (AIS₁, AIS₂) à partir de signaux radioélectriques AIS (AIS₁₊₂) superposés reçus de différentes cellules radioélectriques AIS (Z₁, Z₂) d'une zone de réception (4a) d'une unité de réception AIS (3a) disposée sur un avion de ligne (2a) en fonction d'un ou plusieurs signaux radioélectriques AIS (AIS₂) des signaux radioélectriques AIS (AIS₁₊₂) superposés de la zone de réception (4a) qui ont été reçus par une ou plusieurs unités de réception AIS (3b) différentes de l'unité de réception AIS (3a) de l'avion de ligne (2a) à l'intérieur de la zone de réception (4a), **caractérisé en ce qu'**au moins un dispositif de traitement de signaux (6a, 6b) est disposé sur chaque avion de ligne (2a, 2b), lequel est connecté en signalisation à l'unité de réception AIS (3a, 3b) de l'avion de ligne (2a, 2b) respectif, et **en ce que** les unités de réception AIS (3a, 3b) sont connectées en signalisation à au moins un dispositif de communication (7a, 7b), les dispositifs de communication (7a, 7b) étant respectivement conçus pour échanger les signaux radioélectriques AIS reçus par les unités de réception AIS (3a, 3b) connectées dans la zone de réception (4a, 4b) respective avec d'autres dispositifs de communication par le biais d'une liaison de communication (L) et de délivrer des signaux radioélectriques AIS échangés à un dispositif de traitement de signaux connecté au dispositif de communication respectif en vue du traitement des signaux, et/ou **en ce qu'**il existe une station terrestre (7) qui possède un dispositif de traitement de signaux (9), et **en ce que** les unités de réception AIS (3a, 3b) sont respectivement connectées en signalisation à au moins un dispositif de communication (7a, 7b), les dispositifs de communication étant respectivement conçus pour retransmettre les signaux radioélectriques AIS reçus par les unités de réception AIS connectées dans la zone de réception à la station terrestre (7) par le biais d'une liaison de communication et afin de délivrer les signaux radioélectriques AIS au dispositif de traitement de signaux (9) de la station terrestre, au moins un dispositif de traitement de signaux étant conçu pour déterminer une information de lieu de l'unité d'émission de navire AIS qui a envoyé le signal radioélectrique AIS en fonction de temps de propagation de signal du même signal radioélectrique AIS qui a été reçu par différentes unités de réception AIS, et déterminer des signaux radioélectriques AIS à partir des signaux radioélectriques AIS superposés reçus également en fonction de l'information de lieu déterminée.

2. Système de surveillance (1) selon la revendication 1, **caractérisé en ce que** les unités de réception AIS sont conçues pour compléter les signaux radioélectriques AIS reçus par une information de temps et/ou de lieu, au moins un dispositif de traitement de signaux étant conçu pour déterminer les signaux radioélectriques AIS à partir des signaux radioélectriques AIS superposés reçus également en fonction des informations de temps et/ou de lieu complémentaires des signaux radioélectriques AIS.

3. Système de surveillance (1) selon l'une des revendications précédentes, **caractérisé en ce qu'**il existe au moins une unité d'extraction qui est conçue pour extraire les données de trafic de navire contenues dans les signaux radioélectriques AIS.

4. Système de surveillance (1) selon l'une des revendications précédentes, **caractérisé en ce qu'**au moins un dispositif de traitement de signaux est conçu pour interroger et/ou recevoir des données de trafic de navire déjà extraites des signaux radioélectriques AIS et pour déterminer les signaux radioélectriques AIS à partir des signaux radioélectriques AIS superposés reçus également en fonction des données de trafic de navire interrogées et/ou reçues de la zone de réception dans laquelle les signaux radioélectriques AIS superposés ont été reçus.

5. Système de surveillance (1) selon l'une des revendications précédentes, **caractérisé en ce qu'**au moins un dispositif de traitement de signaux est conçu pour corréler les signaux radioélectriques AIS superposés reçus par une unité de réception AIS avec le ou les signaux radioélectriques AIS qui ont été reçus par d'autres unités de réception AIS et déterminer les signaux radioélectriques AIS à partir des signaux radioélectriques AIS superposés en fonction de la corrélation.
